# EUROPÄISCHE PATENTSCHRIFT

(11) **EP 3 468 388 B1**
(45) Veröffentlichungstag und Bekanntmachung des Hinweises auf die Patenterteilung: **24.01.2024**
(21) Anmeldenummer: 16734554.5
(22) Anmeldetag: 11.06.2016
(51) Int. Cl.: A23L 29/30, C13B 20/12, C13B 30/14, C13B 50/00, C13B 20/16

(54) **VERFAHREN UND ANLAGE ZUR REINIGUNG VON FLÜSSIGZUCKER, HERGESTELLT AUS KRISTALLZUCKER MINDERER REINHEIT**
METHOD AND SYSTEM FOR PURIFYING LIQUID SUGAR PRODUCED FROM GRANULATED SUGAR OF LOW PURITY
PROCÉDÉ ET INSTALLATION DE PURIFICATION DE SUCRE LIQUIDE PRODUIT À PARTIR DE SUCRE CRISTAL DE PURETÉ INFÉRIEURE

(43) Veröffentlichungstag der Anmeldung: 17.04.2019
(73) Patentinhaber: GEA TDS GmbH, 31157 Sarstedt (DE)
(72) Erfinder: KAPFER, Josef, 86720 Nördlingen (DE); HOPGOOD, Lucas, 30161 Hannover (DE)
(74) Vertreter: Hauck Patentanwaltspartnerschaft mbB
(86) Internationale Anmeldenummer: PCT/EP2016/000972
(87) Internationale Veröffentlichungsnummer: WO 2017/211376

(56) Entgegenhaltungen:
- EP-A1- 2 272 990
- WO-A1-01/56403
- CN-A- 105 603 129
- GB-A- 702 955
- US-A- 1 787 502
- US-A- 3 551 203
- US-B2- 9 200 087
- Christopher T Dickenson: "Bag Filters" In: "Filters and Filtration Handbook", 1. Januar 1997 (1997-01-01), Elsevier, XP055337503, ISBN: 978-1-85617-322-3 Seiten 210-219, Seite 210, Zeile 1 - Zeile 5 Seite 213, Zeile 6 - Seite 216, Zeile 10; Abbildungen 3,4

## Beschreibung

### TECHNISCHES GEBIET

Die Erfindung betrifft ein Verfahren zur Reinigung von Flüssigzucker, hergestellt aus Kristallzucker minderer Reinheit, das die Verfahrensschritte gemäß Anspruch 1 umfasst, sowie eine Anlage zur Durchführung des Verfahrens mit den Merkmalen des Nebenanspruchs 10. Endbehandelte und in diesem Zustand unmittelbar in der Getränkeindustrie verwendbare Flüssigzucker bestehen hauptsächlich aus reiner Saccarose (Kristallzucker) und Wasser und sind immer klare, helle und geruchlose Sirupe.

### STAND DER TECHNIK

In der Getränkeindustrie ist es weltweit üblich, Flüssigzucker zur Herstellung der Endprodukte einzusetzen. Als Endprodukte aller Art können alkoholfreie Erfrischungsgetränke, sog. Softdrinks, Nektare, Speisen, Senf, Milchprodukte und viele andere Nahrungsmittel genannt werden, wobei für die Herstellung von Softdrinks die größte Menge an Flüssigzucker benötigt wird.

Flüssigzucker wird aus Kristallzucker (kristalline Ausgangsform des Zuckers) und Wasser hergestellt, wobei dieser Kristallzucker im Wasser aufgelöst und als hochkonzentrierte wässrige Lösung, dem Flüssigzucker, verarbeitet wird. Dieser sogenannte Einfachsirup weist üblicherweise einen sogenannten Trockensubstanzgehalt der Lösung von mindestens 60 % (entsprechend auch mit 60 °Brix bezeichnet) auf, wodurch diese Lösung ohne die Gefahr mikrobiologischen Wachstums gelagert werden kann. Endbehandelte Flüssigzucker sind in der Regel darüber hinaus filtriert und pasteurisiert.

Zur Herstellung eines derartigen Einfachsirups sind zum einen diskontinuierlich und zum andern kontinuierlich arbeitende Verfahren zur Auflösung des kristallinen Zuckers in Wasser bekannt **(**WO 01/56403 A1 und dort referierter Stand der Technik). Zentrale Bedeutung kommt hierbei jeweils den Auflöseapparaturen zu, und hier insbesondere dem sogenannten Lösereaktor. In diesem Lösereaktor wird eine bestimmte Konzentration des Einfachsirups innerhalb enger Toleranzen erwartet. Die bekannten Auflöseprozesse und die zugeordneten Lösereaktoren sind nicht Gegenstand der vorliegenden Erfindung. Sie können allenfalls den Ausgangspunkt des Anmeldungsgegenstandes darstellen.

Der Kristallzucker kann aus Zuckerrüben (Europa, Nordamerika, Asien) oder aus Zuckerrohr (Südamerika, Asien) hergestellt werden. Er liegt in unterschiedlichen Qualitäten vor und diese Qualitäten sind auch abhängig vom Ausgangssubstrat und dem zur Anwendung kommenden Herstellungsprozess.

In Europa wird vorwiegend Kristallzucker der EU-Kategorie 1 (sog. Raffinade) oder der EU-Kategorie 2 (sog. Weißzucker) verwendet. Daraus wird ein klarer Flüssigzucker hergestellt, der ohne Geruch und Farbe unmittelbar weiter verwendet werden kann. Je nach Anwendungsfall wird dieser Flüssigzucker vor der Verarbeitung pasteurisiert, um eventuell vorhandene Keime, Sporen oder Hefen zu deaktivieren. Die internationale Einheit IU (ICUMSA Units) ist ein Maß für die (Farb)Reinheit des Zuckers. Je niedriger der Wert ist, umso reiner und weißer ist der Zucker. Raffinierter Kristallzucker liegt bei kleiner IU 45 (andere Schreibweise auch: < 45 ICUMSA); Zucker oberhalb von IU 800 sind für den menschlichen Verzehr nur bedingt geeignet und müssen einer Raffinierung unterzogen werden, um Verunreinigungen zu entfernen.

In den meisten Ländern der Erde wird Kristallzucker durch Prozesse hergestellt, die nicht zu einer Zuckerqualität der EU-Kategorie 1 oder 2 führen. Dieser Kristallzucker enthält Reststoffe der Pflanze, aus der er gewonnen wurde, Farbstoffe und teilweise auch Geruchsstoffe, die die Qualität des Flüssigzuckers entscheidend beeinflussen. Dieser Kristallzucker wird jedoch wesentlich günstiger auf dem Weltmarkt angeboten als der Kristallzucker der EU-Kategorie 1 oder 2, und er ist in vielen Ländern der Erde der einzig verfügbare Kristallzucker. Soll dieser preislich günstigere Zucker in Form von Flüssigzucker bei der Herstellung von Softdrinks eingesetzt werden, bedarf er zunächst einer aufwändigen Klärung, um die enthaltenen Reststoffe zu entfernen. Ziel dieses Klärungsprozesses ist es, einen klaren und geruchlosen Flüssigzucker zu erhalten, dessen (Farb)Reinheit ein Wert von unter 30 IU aufweisen soll.

Die Qualität des endbehandelten Flüssigzuckers wird durch die Qualität des Kristallzuckers als Rohstoff, durch die Qualität des bei der Lösung verwendeten Wassers und durch die Art des Verfahrens zur Reinigung des aus der Auflösung des Kristallzuckers in Wasser gewonnenen unbehandelten Flüssigzuckers bestimmt. Es haben sich zahlreiche Verfahren zur Klärung und Reinigung des unbehandelten Flüssigzuckers etabliert, um, ausgehend von den unterschiedlichsten Zuckerqualitäten, das vorgenannte Ziel zu erreichen. Wesentliche und weltweit dominierende Verfahrensmerkmale sind zum Einen die Klärung mit den sog. Filterhilfsstoffen Kieselgur oder Zellulose und zum Anderen die Klärung und Abscheidung unerwünschter Bestandteile mittels Ionenaustauscher.

### Klärung mit Ionenaustauschern

Bei der Klärung mit Ionenaustauschern wird die Zuckerlösung zuerst gefiltert. Sie wird dann mit einer Temperatur von 60-80 °C in einen Reaktor gefördert, in dem sich ein lonenaustauscherharzbett befindet. Der Flüssigzucker fließt durch das Bett und reagiert mit dem Harz. Hierbei werden die Ionen auf dem Harz mit denen der unterwünschten Farbstoffe getauscht, so dass der Flüssigzucker nach dem Durchlauf geklärt ist. Es gibt Verfahren, bei denen, bei starker Verschmutzung des zu behandelnden Flüssigzuckers, mehrere solcher Betten hintereinander geschaltet werden. Zur Reinigung wird das Harzbett mit einer Regenerationslösung gespült. Diese Lösung wird an den Ionenaustauscher angepasst und nimmt zum Einen die abgelagerte Verschmutzung auf und zum Anderen regeneriert sie das Harz mit den jeweiligen Ionen, die im Austausch verbraucht worden sind.

### Klärung mit Aktivkohle und Filterhilfsstoffen

Die bekannte Klärung bzw. Reinigung von Flüssigzucker, gewonnen aus Kristallzucker minderer Reinheit, mit Aktivkohle und dem Filterhilfsmittel Kieselgur soll nachfolgend mit Blick auf die notwendigen Verfahrensschritte kurz umrissen werden. Kristallzucker (bis zu 1000 ICUMSA) wird in Wasser aufgelöst. Das Wasser wird vor dem Lösungsprozess auf die gewünschte Lösungstemperatur erwärmt. Die gewonnene Zuckerlösung wird vorgefiltert und anschließend weiter erwärmt. In den heißen, vorgefilterten Flüssigzucker wird in Abhängigkeit von seinem Reinheitsgrad eine zuvor in Wasser aufgelöste Aktivkohle dosiert. Der mit der Aktivkohle vermischte vorgefilterte Flüssigzucker wird einem Reaktionstank zugeführt und verbleibt dort, wiederum in Abhängigkeit von seinem Reinheitsgrad, eine vorbestimmte Verweil- bzw. Reaktionszeit. In dieser Reaktionszeit findet durch ein Einwirken der Aktivkohle auf die Farbteilchen und/oder die Geruchsstoffe eine Reaktion statt, durch die sich größere Agglomerate dieser Bestandteile bilden und die dadurch einfacher abgeschieden werden können.

Die Abscheidung der Agglomerate erfolgt nach Ablauf einer hinreichenden Reaktionszeit durch Filtrieren mit Hilfe des Filterhilfsmittels bzw. -stoffes, beispielsweise Kieselgur oder Zellulose, in einem sog. Anschwemmfilter. Hier wird auf feinen als Träger fungierenden Filterplatten das Filterhilfsmittel Kieselgur oder Zellulose angeschwemmt, das dadurch einen Filterkuchen bildet. Dieser Filterkuchen filtriert die reagierte Aktivkohle aus dem vorliegenden Flüssigzucker heraus. Es entsteht ein klarer und geruchloser Flüssigzucker mit geringen Restmengen an Farbstoffen. Eine abschließende Klärung des Flüssigzuckers wird ohne einen Filterhilfsstoff, beispielsweise mittels eines Beutelfilters mit einer Lochweite von 5-50 µm, durchgeführt. Es liegt dann ein klarer, behandelter Flüssigzucker mit einer Farbreinheit von kleiner 30 ICUMSA vor, der in einer Pasteurisierung, beispielsweise bei 80-90 °C, erhitzt und dadurch sterilisiert werden kann.

Der Einsatz von Filterhilfsstoffen ist sehr personalintensiv. Die Entsorgung der Abfallstoffe ist relativ aufwendig und kostenintensiv. Die Anschaffungskosten des Filterhilfsstoffes fallen ständig in Korrelation zur Betriebszeit der zugeordneten Filtriereinheiten an.

Das Dokument US 3 551 203 A offenbart ein Verfahren zum Reinigen und Entfärben von Zuckerlösungen, bei dem in mindestens zwei Entfärbungsfiltern, die im Wechsel betrieben werden, eine vorgeklärte Zuckerlösung entfärbt wird. Im jeweiligen Entfärbungsfilter wird mittels einer in einem Vorbeschichtungsschlammtank zubereiteten Aktivkohle-Aufschlämmung, die über den jeweiligen Entfärbungsfilter zirkuliert wird, ein Filterkuchen aus Aktivkohle aufgebaut. Die Vorklärung einer Zucker-Aktivkohle-Lösung erfolgt mittels einer Aktivkohle-Aufschlämmung im einem Klärungstank, von dem aus ein Filter zur Abtrennung der Aktivkohle und anderer Beimengungen beschickt wird. Die derart vorgeklärte Zuckerlösung gelangt über einen Versorgungstank zum jeweiligen Entfärbungsfilter, wobei die Aktivkohle-Aufschlämmung im Klärungstank aus dem jeweiligen Entfärbungsfilter zugeführt wird. Die Vorklärung ist abgeschlossen, wenn die Mischung aus Zuckerlösung und Aktivkohle-Aufschlämmung im Klärungstank über den Filter gefahren wurde.

Der Gegenstand nach der US 1 787 502 A betrifft ein Verfahren zur Behandlung von Flüssigzucker ohne den Einsatz von Filterhilfsstoffen. Die Behandlung besteht in einer Vorbehandlung des Flüssigzuckers in einem Mischtank und in einem Absetzbecken, wobei aus letzterem die unterschiedlichen Fraktionen des Flüssigzuckers Tanks mit einer jeweiligen Filtereinheit zugeführt werden. Aus Karbon-Tanks wird mit Flüssigzucker aus den Tanks aufgeschlämmte Aktivkohle den Tanks zugeführt und dort mit dem Flüssigzucker vermischt. In den Filtereinheiten rotiert jeweils eine perforierte Trommel, über deren Oberfläche die Mischung aus Flüssigzucker und Aktivkohle ausgetragen und voneinander separiert wird. Der sich im Zentrum der Trommeln ansammelnde geklärte und entfärbte Flüssigzucker wird über eine Auslassleitung abgeführt. Die auf der Oberfläche der Trommeln verbleibende Aktivkohle wird von dort abgeleitet und entweder verworfen oder den Karbon-Tanks zugeführt und erneut wiederverwendet.

Das Dokument GB 702 955 A beschreibt ein Verfahren zur Verbesserung bei oder im Zusammenhang mit der Behandlung von Flüssigkeiten mittels Aktivkohle ohne den Einsatz von Filterhilfsstoffen, wobei mindestens zwei verschiedene Arten von Aktivkohle nacheinander verwendet werden. Der zuerst verwendete Typ weist eine relativ steile Adsorptionsisotherme auf, während der nachfolgende Typ oder die nachfolgend verwendeten Typen eine flachere Isotherme oder progressiv flachere Isothermen aufweist bzw. aufweisen.

Es ist Aufgabe der vorliegenden Erfindung, ein Verfahren und eine Anlage zur Reinigung von Flüssigzucker, hergestellt aus Kristallzucker minderer Reinheit, zu schaffen, mit denen die Herstellung eines endbehandelten, klaren Flüssigzuckers sichergestellt ist, ohne dass ein Einsatz von Filterhilfsstoffen erforderlich ist, und mit denen gegenüber dem Stand der Technik wesentlich geringere Kosten für den Betrieb der Anlage bei einer besseren Verfügbarkeit und einem höheren Automatisierungsgrad der Anlage sowie eine bessere Reproduzierbarkeit der Qualitätskriterien des behandelten Flüssigzuckers erreichbar sind.

### ZUSAMMENFASSUNG DER ERFINDUNG

Diese Aufgabe wird durch Verfahren mit den Merkmalen des Anspruchs 1 gelöst. Vorteilhafte Ausgestaltungen des Verfahrens sind Gegenstand der Unteransprüche. Eine Anlage zur Durchführung des erfindungsgemäßen Verfahrens ist Gegenstand des unabhängigen Anspruchs 10. Vorteilhafte Ausgestaltungen der Anlage sind Gegenstand der zugeordneten Unteransprüche.

Der erfinderische verfahrenstechnische Grundgedanke besteht darin, auf Trenn- und Abscheideverfahren zu verzichten, die Filterhilfsstoffe benötigen und stattdessen ein an sich bekanntes Trenn- und Abscheideverfahren zur Anwendung zu bringen, das ohne diese Filterhilfsstoffe auskommt. Ein solches Verfahren ist die direkte Filtration mit einem Cricket-Filter, das mit porösen Filterelementen arbeitet, die an internen Filterregistern montiert sind. Die wirksame Filtration der Zucker-Aktivkohle-Lösung beginnt, wenn auf den Filterelementen durch Zirkulation dieser Lösung ein hinreichend dicker Filterkuchen aufgebaut ist. Das Cricket-Filter ist ein geschlossenes Filtrationssystem und kann vollständig automatisiert werden. Dieses Filter liefert eine hohe Filtrationsreinheit. Der Filterkuchenaustrag durch Zurückpulsen mit Luft (oder Gas) wird für einzelne Register getrennt durchgeführt, was die Effektivität verbessert.

Ein weiterer erfinderischer Grundgedanke besteht darin, die Aktivkohle nicht, wie dies bislang im Stand der Technik bei der in Rede stehenden Zuckerklärung praktiziert wird, zunächst in Wasser vorzulösen, sondern sie ohne diese Vorbehandlung, also originär, unmittelbar in den vorgefilterten Flüssigzucker zu dosieren. Diese Dosierung wird vorzugsweise als sog. Inline-Dosierung mittels einer Mischdüse oder anderen Inline-Dosiermitteln durchgeführt, d.h. die originäre Aktivkohle wird in einem bestimmten Mengenverhältnis in den Strom des vorgefilterten Flüssigzuckers dosiert und unmittelbar mit diesem vermischt. Eine batchweise Dosierung, d.h. eine Dosierung einer bestimmten Menge Aktivkohle in eine bestimmte vorgelegte Menge vorgefilterten Flüssigzucker, ist gleichermaßen im Rahmen des erfindungsgemäßen Verfahrens möglich, ohne dass der Schutzbereich des Verfahrens dadurch verlassen wird.

Um zu verhindern, dass bei der direkten Filtration im Cricket-Filter nicht zurückgehaltene Aktivkohle in das spätere Endprodukt gelangt und dieses kontaminiert, sieht ein weiterer erfindersicher Grundgedanke ein dem direkten Filtrieren nachgeschaltetes Sicherheitsfiltrieren vor. Dieses Sicherheitsfiltrieren erfolgt vorzugsweise durch einen sog. Backup Filter, der in Abhängigkeit vom Anwendungsfall mit einer Maschenweite vorzugsweise im Bereich von 0,1 bis 50 µm ausgestattet ist.

Das erfindungsgemäße Verfahren geht in seiner grundlegenden Konzeption davon aus, dass ein zu reinigender Flüssigzucker als vorgefilterter Flüssigzucker vorliegt. Aus diesem vorgefilterten Flüssigzucker sind durch Filterung bereits Beimengungen oberhalb von ca. 100 µm abgeschieden, und er tritt in diesem Ausgangszustand an einer ersten Schnittstelle in einen Anlagenabschnitt, mit dem das erfindungsgemäße Verfahren durchgeführt wird, ein und an einer zweiten Schnittstelle aus dem Anlagenabschnitt aus, wobei das Verfahren ohne Filterhilfsstoffe und die für diese benötigten Trenn- und Abscheidevorrichtungen auskommt. Das Verfahren in seiner Grundkonzeption umfasst die folgenden Schritte (c) bis (g):
(c) Dosieren von nicht vorgelöster Aktivkohle in einem Verhältnis von 0,01 bis 0,5 Mengenprozent zu dem Mengenstrom des vorgefilterten Flüssigzuckers in Abhängigkeit von den in dem vorgefilterten Flüssigzucker verbliebenen Verunreinigungen zur Gewinnung einer Zucker-Aktivkohle-Lösung,
(d) Reagieren der Komponenten der Zucker-Aktivkohle-Lösung miteinander über eine vorbestimmte Reaktionszeit von 10 bis 60 Minuten,
(e) Zirkulieren der Zucker-Aktivkohle-Lösung über einen zur direkten Filtration bestimmten Filter zwecks Aufbaus eines Filterkuchens aus der abzuscheidenden Aktivkohle,
(f) direktes Filtrieren der Zucker-Aktivkohle-Lösung über den nach Schritt (e) aufgebauten Filterkuchen, das zu einem gefilterten Flüssigzucker führt,
(g) Sicherheitsfiltrieren des gefilterten Flüssigzuckers zur Abscheidung von Aktivkohle, die im Schritt (f) nicht zurückgehalten wurde, das nach den Schritten (c) bis (g) zu einem sicherheitsgefilterten Flüssigzucker mit einem Wert für den Restfarbstoff von unter 30 ICUMSA führt.

Die Vorteile des erfindungsgemäßen Verfahrens liegen auf der Hand und ergeben sich zum Teil aus dem Verzicht auf Filterhilfsstoffe und zum Teil aus Vorteilen, die den Verfahrensschritten (c) bis (g) grundsätzlich innewohnen. Durch das erfindungsgemäße Verfahren ergeben sich insbesondere folgende Vorteile:
- einfacher Behandlungsprozess des Flüssigzuckers
- der Behandlungsprozess ist besser reproduzierbar
- bessere Reproduzierbarkeit der Qualitätskriterien des behandelten Flüssigzuckers
- geringere Unterhaltskosten gegenüber bekannten Verfahren
- geringerer Personalaufwand gegenüber bekannten Verfahren
- höherer Automationsgrad gegenüber bekannten Verfahren
- geringerer Platzbedarf gegenüber bekannten Verfahren
- keine Filterhilfsstoffe.

Das erfindungsgemäße Verfahren in seiner Grundkonzeption und der Anlagenabschnitt zu seiner Durchführung können eingebettet werden in unterschiedliche Rand- und Verfahrensbedingungen. So kann der vorgefilterte Flüssigzucker unmittelbar vor dem Anlagenabschnitt hergestellt oder aber auch an anderer Stelle hergestellt und angeliefert werden. Auch die Weiterverarbeitung des mit dem erfindungsgemäßen Verfahren hergestellten behandelten Flüssigzuckers kann sehr unterschiedlich ausgestaltet sein, soweit es beispielsweise eine Kühlung und anschließende Lagerung oder eine unmittelbar nachfolgende Verwendung im warmen Zustand betrifft.

Es hat sich als besonders vorteilhaft erwiesen, wenn sich dem Verfahren in seiner Grundkonzeption gemäß den Schritten (c) bis (g) ein optionaler Schritt (h) anschließt, bei dem ein definiertes Entgasen, vorzugsweise eine Vakuum-Entgasung, des sicherheitsgefilterten Flüssigzuckers durchgeführt wird, die zu einem definiert entgasten Flüssigzucker führt. Durch das Entgasen gemäß Schritt (h) werden Geruchsstoffe und Restsauerstoff entfernt. Dadurch kann der Restsauerstoff durch das Vakuum kontrolliert und, je nach Anforderung, auf einen vorbestimmten Wert eingestellt werden. Dieser Vorteil der Einstellbarkeit des Restsauerstoffgehaltes ist bei bekannten Verfahren nicht gegeben.

Zur Erzielung eines mikrobakteriell einwandfreien und lagerfähigen Flüssigzuckers schlägt die Erfindung weiterhin vor, dass sich dem Verfahren in seiner Grundkonzeption gemäß den Schritten (c) bis (g) oder dem um den optionalen Schritt (h) erweiterten Verfahren gemäß den Schritten (c) bis (h) ein weiterer optionaler Schritt (i) anschließt, bei dem ein Pasteurisieren des sicherheitsgefilterten Flüssigzuckers oder des entgasten Flüssigzuckers durchgeführt wird, das zu einem endbehandelten sterilen Flüssigzucker führt. Das Pasteurisieren besteht in an sich bekannter Weise aus einer Erhitzung bzw. Hocherhitzung auf eine hinreichend hohe und vorbestimmte Temperatur und eine Heißhaltung über eine vorbestimmte Zeitdauer auf dieser Temperatur.

Damit sich das erfindungsgemäße Verfahren für die Reinigung von Flüssigzucker bis zu einer (Farb)Reinheit von nahezu 1000 ICUMSA eignet, wird das Dosieren von nicht vorgelöster Aktivkohle in den zu reinigenden Flüssigzucker in einem Mengenverhältnis, das einen sehr weiten Bereich umfasst, nämlich von 0,01 bis 0,5 Mengenprozent zu dem Mengenstrom des vorgefilterten Flüssigzuckers, durchgeführt.

Eine bevorzugte Ausgestaltung des erfindungsgemäßen Verfahrens sieht weiterhin vor, dass den Schritten (c) bis (g) die folgenden Schritte (a) und (b) und ggf.
(b1) vorgeschaltet sind und dass der Schritt (j) dem letzten der Schritte (g) bis (i) nachgeschaltet ist:
   (a) ein Auflösen des Kristallzuckers in Wasser, um einen unbehandelten Flüssigzucker zu erhalten,
   (b) ein erstes Filtrieren des unbehandelten Flüssigzuckers, um diesen aus einer Zuckerlösereinheit abzuscheiden und einen vorgefilterten Flüssigzucker zu erhalten und
(b1) erforderlichenfalls wenigstens ein einstufiges Erwärmen (H3, H4) des vorgefilterten Flüssigzuckers;
(j) wenigstens ein einstufiges Kühlen des behandelten Flüssigzuckers.

Schritt (b1) ist nur dann erforderlich, wenn eine Bereitstellungstemperatur, das ist hier eine Temperatur des vorgefilterten Flüssigzuckers, nicht einer erforderlichen Behandlungstemperatur, das ist hier eine Temperatur vor dem Dosieren, entspricht.

Zur Steigerung der Wirtschaftlichkeit sieht das erfindungsgemäße Verfahren gemäß einer vorteilhaften Ausgestaltung vor, dass der beim direkten Filtrieren entstehende Filterkuchen in Zeitabständen in eine Filterkuchen-Sammeleinheit ausgetragen, dort gesammelt und als eine beladene Aktivkohle, wenn sie eine hinreichende Aktivität besitzt, der frischen Aktivkohle zum Wiederverwenden beigemischt wird.

Wenn die über den Filterkuchenaustrag gewonnene beladene Aktivkohle keine hinreichende Aktivität mehr besitzt, schlägt eine andere Ausgestaltung des erfindungsgemäßen Verfahrens zur Steigerung der Wirtschaftlichkeit vor, dass diese beladene Aktivkohle als Filtrierungsabfall verworfen wird und dass ein Behandeln und Rückgewinnen des Filtrierungsabfalls vorgesehen ist, das eine Auftrennung in einen ausgepressten Flüssigzucker und in eine Abfall-Trockenmasse bewirkt, und dass der ausgepresste Flüssigzucker zum unbehandelten Flüssigzucker zurückgeführt und diesem beigemischt wird.

Um die bei der notwendigen Abkühlung des behandelten Flüssigzuckers anfallende Wärme zu nutzen, sieht ein weiterer Vorschlag vor, dass das erste Kühlen des aus dem letzten der Schritte (g) bis (i) generierten Flüssigzuckers in einem regenerativen Wärmeaustausch mit einem ersten Erwärmen des Wassers und einem sich anschließenden dritten Erwärmen des vorgefilterten Flüssigzuckers durchgeführt wird. Durch diese Maßnahme können etwa 90 % der eingesetzten Wärmeenergie zurückgewonnen werden.

Diesem jeweiligen Vorwärmen im regenerativen Wärmeaustausch schließt sich in vorteilhafter Weise, um die optimale Behandlungstemperatur sicher zu erreichen und einzustellen, jeweils eine nicht regenerative Erwärmung an. Hierzu ist vorgesehen, dass zum Einen das Wasser nach dem regenerativen ersten Erwärmen einem zweiten Erwärmen und dass zum Anderen der vorgefilterte Flüssigzucker nach dem regenerativen dritten Erwärmen einem vierten Erwärmen unterzogen wird.

Der erfinderische Grundgedanke bei der Konzeption einer Anlage zur Durchführung des Verfahrens nach der Erfindung besteht darin, auf Trenn- und Abscheidevorrichtungen zu verzichten, die Filterhilfsstoffe, benötigen und stattdessen eine an sich bekannte Trenn- und Abscheidevorrichtung zur Anwendung zu bringen, die ohne diese Filterhilfsstoffe auskommt. Bei dieser Vorrichtung handelt es sich um eine Inline-Dosiereinheit, der sich entweder eine Strömungsreaktoreinheit oder eine Rührkesselreaktoreinheit unmittelbar anschließt, eine Aktivkohle-Bereitstellungseinheit, eine Cricket-Filtrierungseinheit und eine Sicherheitsfiltrierungseinheit.

Eine Anlage zur Reinigung von Flüssigzucker, hergestellt aus Kristallzucker minderer Reinheit, mit der das erfindungsgemäße Verfahren in vorteilhafter Weise durchführbar ist, geht in seiner grundlegenden Konzeption davon aus, dass ein zu reinigender Flüssigzucker als vorgefilterter Flüssigzucker bereits vorliegt. Aus diesem vorgefilterten Flüssigzucker sind durch Filtrierung bereits Beimengungen oberhalb von ca. 100 µm abgeschieden, und er tritt in diesem Ausgangszustand mit einer Behandlungstemperatur an einer ersten Schnittstelle in einen Anlagenabschnitt, mit dem das erfindungsgemäße Verfahren durchgeführt wird, ein und an einer zweiten Schnittstelle aus dem Anlagenabschnitt als sicherheitsgefilterter Flüssigzucker aus. Der Anlagenabschnitt weist zwischen der ersten und der zweiten Schnittstelle die folgenden Merkmale (E) bis (I) auf:
(E) eine mit der ersten Schnittstelle verbundene Inline-Dosiereinheit, bestehend aus einer Mischdüse oder anderen Inline-Dosiermitteln, zum Dosieren einer nicht vorgelösten Aktivkohle in den Strom des vorgefilterten Flüssigzuckers zur Herstellung einer Zucker-Aktivkohle-Lösung,
(F) eine in die Inline-Dosiereinheit einmündende Aktivkohle-Bereitstellungseinheit zum Bereitstellen von Aktivkohle,
(G) entweder eine Strömungsrohrreaktoreinheit oder eine Rührkesselreaktoreinheit, die jeweils mit der Inline-Dosiereinheit in Reihenschaltung verbunden ist, zum Reagieren der Komponenten der Zucker-Aktivkohle-Lösung miteinander über eine vorbestimmte Reaktionszeit,
(H) eine mit der Strömungsrohrreaktoreinheit oder der Rührkesselreaktoreinheit in Reihenschaltung verbundene Cricket-Filtrierungseinheit zum direkten Filtrieren der Zucker-Aktivkohle-Lösung mittels eines aus der abzuscheidenden Aktivkohle durch Zirkulation in der Cricket-Filtrierungseinheit aufgebauten Filterkuchens und
(I) eine mit der Cricket-Filtrierungseinheit in Reihenschaltung verbundene Sicherheitsfiltrierungseinheit zum Sicherheitsfiltrieren der in der Cricket-Filtrierungseinheit nicht zurückgehaltenen Aktivkohle.

Die erfindungsgemäße Anlage bzw. der Anlagenabschnitt in seiner Grundkonzeption kann eingebettet sein in unterschiedliche Anlagenkonzepte. So kann der vorgefilterte Flüssigzucker unmittelbar vor dem Anlagenabschnitt hergestellt oder aber auch an anderer Stelle hergestellt und angeliefert werden. Auch die Weiterverarbeitung des mit dem erfindungsgemäßen Anlagenabschnitt hergestellten behandelten Flüssigzuckers kann sehr unterschiedlich ausgestaltet sein, soweit es beispielsweise eine Kühlung und anschließende Lagerung oder eine unmittelbar nachfolgende Verwendung im warmen Zustand betrifft.

Eine bevorzugte Ausführungsform der Anlage sieht vor, dass der Anlagenabschnitt integraler Teil einer ersten, einer zweiten, einer dritten oder einer vierten Anlage ist, und dass diese Anlagen jeweils die dem Anlagenabschnitt vorgeordneten Merkmale (A) bis (D) und das nachgeordnete Merkmal (J) umfassen:
(A) eine Wasserbereitstellungseinheit für Wasser, die mit einer Zuckerlösereinheit verbunden ist,
(B) eine Zuckerbereitstellungseinheit für Kristallzucker, die mit der Zuckerlösereinheit, in der der Kristallzucker ein Auflösen im Wasser zu einem unbehandelten Flüssigzucker erfährt, verbunden ist,
(C) eine mit der Zuckerlösereinheit in Reihenschaltung verbundene erste Filtrierungseinheit für ein erstes Filtrieren des unbehandelten Flüssigzuckers zu dem vorgefilterten Flüssigzucker) und
(D) wenigstens eine mit der ersten Filtrierungseinheit in Reihenschaltung verbundene erste Wärmetauschereinheit für wenigstens ein einstufiges Erwärmen des vorgefilterten Flüssigzuckers;
(J) die mit der Sicherheitsfiltrierungseinheit in Reihenschaltung verbundene wenigstens erste Wärmetauschereinheit für wenigstens ein einstufiges Kühlen des sicherheitsfiltrierten Flüssigzuckers.

Das Merkmal (D) ist nur dann erforderlich, wenn eine Bereitstellungstemperatur, das ist hier eine Temperatur des gefilterten Flüssigzuckers bei Eintritt in den Anlagenabschnitt, nicht einer erforderlichen Behandlungstemperatur, das ist hier eine Temperatur vor der ersten Zentrifugalabscheidereinheit, entspricht.

Mit den vorstehenden Vorrichtungsmerkmalen werden die weiter oben dargestellten, jeweils zugeordneten Verfahrensschritte durchgeführt. Die ebenfalls dort beschriebenen und mit diesen Verfahrensschritten erzielbaren Wirkungen auf das Substrat, den Flüssigzucker, oder die anderen Stoffkomponenten sind unmittelbar auf diese Vorrichtungsmerkmale zu übertragen bzw. mit diesen notwendigerweise verbunden.

Die erfindungsgemäße Anlage ist in verschiedenen Ausgestaltungen ausführbar, mit denen die bereits beschriebenen Ausgestaltungen des erfindungsgemäßen Verfahrens durchführbar sind, wobei jede Ausgestaltung des Verfahrens eine Entsprechung in einer Ausgestaltung der Anlage findet. Die erfindungsgemäße Ausgestaltungen der Anlage werden in den zugeordneten Unteransprüchen 11-18 definiert. Eine Erläuterung der Ausgestaltungen der Anlage mit Blick auf jeweilige Wirkung dieser Ausgestaltung auf den Flüssigzucker oder die anderen Stoffkomponenten erübrigt sich daher. Die jeweiligen Ausgestaltungen der Anlage finden sich in den nachfolgenden Figurenbeschreibungen.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens und in bevorzugten Ausführungsformen einer Anlage zu dessen Durchführung realisiert ist, sind in der Zeichnung das erfinderische Verfahren in seiner Grundkonzeption und ein darauf aufbauendes erstes, zweites, drittes oder viertes erfindungsgemäßes Verfahren schematisch dargestellt, wobei sich das zweite vom ersten und das dritte vom zweiten Verfahren jeweils durch optionale Erweiterungen gegenüber der Grundkonzeption unterscheidet. Das vierte Verfahren unterscheidet sich von den anderen Verfahren dadurch, dass eine optionale Erweiterung außerhalb der Grundkonzeption vorgesehen ist. Die Verfahren und die zugehörigen Anlagen, die sich daraus erschließen, sind nachfolgend beschrieben. Es zeigen
- **Figur 1**: in Form eines Verfahrensschemas ein erfindungsgemäßes erstes Verfahren zur Reinigung von Flüssigzucker, hergestellt aus Kristallzucker minderer Reinheit, aus dem sich eine erste Anlage zur Durchführung des ersten Verfahrens in ihren wesentlichen Merkmalen erschließt;
- **Figur 2**: in Form eines Ausschnittes aus dem Verfahrensschema gemäß **Figur 1** das erste Verfahren in seiner Grundkonzeption;
- **Figur 3**: in Form des Verfahrensschemas gemäß **Figur 1** ein gegenüber dem ersten Verfahren in seiner Grundkonzeption optional erweitertes zweites Verfahren und eine sich daraus erschließende zweite Anlage zur Durchführung des zweiten Verfahrens;
- **Figur 4**: in Form des Verfahrensschemas gemäß **Figur 3** ein gegenüber dem zweiten Verfahren in der Grundkonzeption optional erweitertes drittes Verfahren und eine sich daraus erschließende dritte Anlage zur Durchführung des dritten Verfahrens und
- **Figur 5**: in Form des Verfahrensschemas gemäß **Figur 4** ein viertes Verfahren, das gegenüber dem dritten Verfahren außerhalb der Grundkonzeption durch optionale Erweiterungen ergänzt ist und eine sich daraus erschließende vierte Anlage zur Durchführung des vierten Verfahrens.

### DETAILLIERTE BESCHREIBUNG

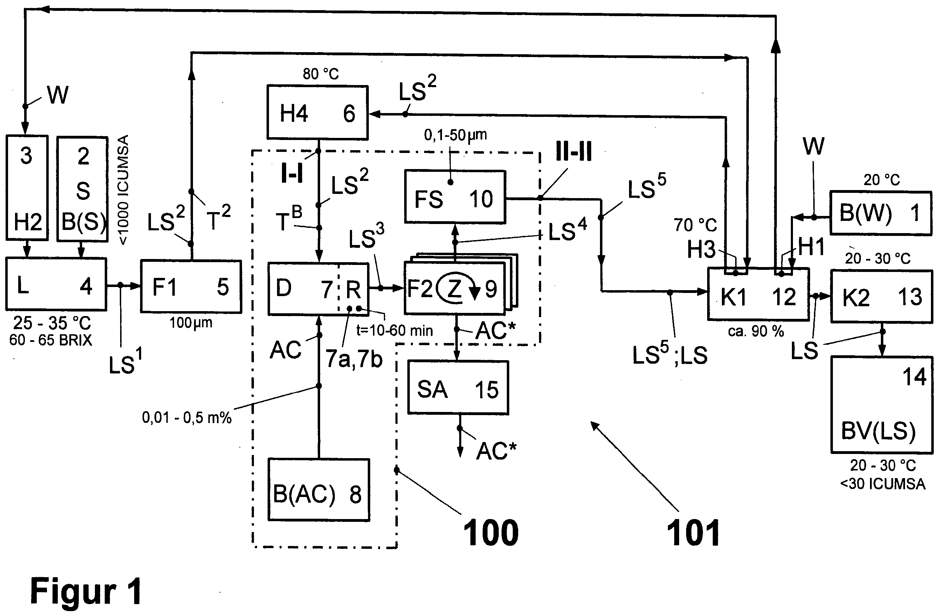

Die Klärung bzw. Reinigung von Flüssigzucker, gewonnen aus Kristallzucker minderer Reinheit, ausschließlich mit Aktivkohle soll nachfolgend anhand des Verfahrensschemas gemäß **Figur 1** skizziert werden, aus dem das zugeordnete erste Verfahren ersichtlich ist und aus dem sich eine zugehörige erste Anlage 101 zur Durchführung des ersten Verfahrens in ihren wesentlichen Merkmalen erschließt.

Ein in einer Zuckerbereitstellungseinheit 2 bereitgestellter Kristallzucker S (Verfahrensschritt: Bereitstellen von Kristallzucker B(S) bis zu 1000 ICUMSA) wird einer Zuckerlösereinheit 4 zugeführt und dort mit Wasser W aus einer Wasserbereitstellungseinheit 1 (Verfahrensschritt: Bereitstellen von Wasser (B(W)) aufgelöst (Verfahrensschritt: Auflösen L). Das mit einer Temperatur von ca. 20 °C bereitgestellte Wasser W wird vor dem Lösungsprozess in einer ersten Wärmetauschereinheit 12 vorgewärmt (Verfahrensschritt: erstes Erwärmen H1) und in einer zweiten Wärmetauschereinheit 3 auf die gewünschte Lösungstemperatur erhitzt (Verfahrensschritt: zweites Erwärmen H2). In der Zuckerlösereinheit 4 liegt beispielsweise ein unbehandelter Flüssigzucker LS¹ mit einer Temperatur von 25-35 °C und einem Zuckergehalt von 60-65 °Brix vor.

Bei der Klärung mit Aktivkohle AC wird der unbehandelte Flüssigzucker LS¹, vorzugsweise kontinuierlich, einer ersten Filtrierungseinheit 5, vorzugsweise mit einer maximalen Porenweite von ca. 100 µm, zugeführt und dort vorfiltriert (Verfahrensschritt: erstes Filtrieren F1). Dabei werden ungelöste Zuckerkristalle und andere grobe Verunreinigungen oberhalb der gewählten Porenweite abgeschieden. Ein gewonnener vorgefilterte Flüssigzucker LS² mit einer Bereitstellungstemperatur T², die näherungsweise der Temperatur in der Zuckerlösereinheit 4 entspricht, wird dann in der ersten Wärmetauschereinheit 12 weiter erwärmt (Verfahrensschritt: drittes Erwärmen H3), beispielsweise auf ca. 70 °C, und anschließend in einer dritten Wärmetauschereinheit 6, beispielsweise auf eine Behandlungstemperatur T^{B} von ca. 80 °C, erhitzt (Verfahrensschritt: viertes Erwärmen H4).

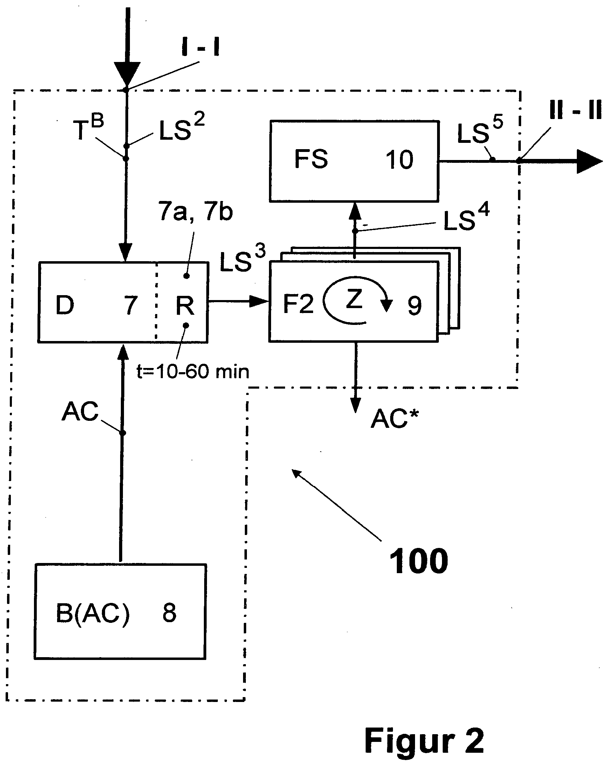

In den heißen, vorgefilterten Flüssigzucker LS², der in einen in **Figur 1** strichpunktiert umrandet dargestellten Anlagenausschnitt 100 an einer ersten Schnittstelle I-I eintritt (siehe hierzu auch **Figur 2****),** wird in einer Dosiereinheit 7, nämlich eine Inline-Dosiereinheit, in Abhängigkeit von seinem Reinheitsgrad die in einer Aktivkohle-Bereitstellungseinheit 8 bereitgestellte Aktivkohle AC (Verfahrensschritt: Bereitstellen von Aktivkohle (B(AC)) dosiert (Verfahrensschritt: Dosieren D). Die Dosierung D erfolgt, bezogen auf den Mengenstrom oder die Menge des Flüssigzuckers, in einem Bereich von 0,01 bis 0,5 Mengenprozent. Es entsteht eine Zucker-Aktivkohle-Lösung LS³. In einer sich der Dosiereinheit 7 unmittelbar anschließenden Strömungsrohrreaktoreinheit 7a oder einer Rührkesselreaktoreinheit 7b verbleibt der mit der Aktivkohle AC vermischte vorgefilterte Flüssigzucker LS², wiederum in Abhängigkeit von seinem Reinheitsgrad, eine vorbestimmte Verweilzeit bzw. Reaktionszeit t, von 10 bis 60 Minuten (Verfahrensschritt: Reagieren R). Dabei werden die kürzeren Reaktionszeiten vorzugsweise in der Strömungsrohrreaktoreinheit 7b, d.h. in einer Rohrleitung bestimmter Länge, und die längeren Reaktionszeiten vorzugsweise in der Rührkesselreaktoreinheit 7b, beispielsweise in einem Pufferbehälter mit oder ohne Rührmittel bzw. Rührwirkung, verwirklicht. In der Reaktionszeit t findet durch das Reagieren R der Aktivkohle AC auf die Farbteilchen und/oder die Geruchsstoffe eine Reaktion statt, durch die sich größere Agglomerate dieser Bestandteile bilden und die dadurch einfacher abgeschieden werden können.

Die Abscheidung der Agglomerate aus der Zucker-Aktivkohle-Lösung LS³ erfolgt im Anschluss an die Strömungsrohr- oder die Rührkesselreaktoreinheit 7a, 7b in einer Cricket-Filtrierungseinheit 9 (Verfahrensschritt: direktes Filtrieren F2 bzw. Cricket-Filtrieren F2). Die Cricket-Filtrierungseinheit 9 wurde vorstehend im Kontext zum erfindungsgemäßen Verfahren hinsichtlich Aufbau und Wirkungsweise bereits kurz umrissen. Durch Umpumpen der Zucker-Aktivkohle-Lösung LS³ innerhalb der Cricket-Filtrierungseinheit 9 (Verfahrensschritt: Zirkulieren Z) entsteht zunächst auf den Filterelementen des internen Filterregisters ein Filterkuchen aus Aktivkohle AC, der dann bei hinreichender Dicke die reagierte Aktivkohle AC aus dem vorliegenden Flüssigzucker herausfiltriert. Es entsteht ein klarer und geruchloser gefilterter Flüssigzucker LS⁴ mit geringen Restmengen an Farbstoffen.

Der beim direkten Filtrieren F2 entstehende Filterkuchen wird in Zeitabständen in eine Filterkuchen-Sammeleinheit 15 ausgetragen, dort gesammelt (Verfahrensschritt: Sammeln SA) und als eine beladene Aktivkohle AC*, abhängig von ihrer Aktivität, weiterbehandelt. Diesbezügliche Maßnahmen werden nachstehend noch beschrieben.

An die Cricket-Filtrierungseinheit 9 schließt sich eine Sicherheitsfiltrierungseinheit 10 an, in der eine abschließende Klärung des gefilterten Flüssigzuckers LS⁴, beispielsweise mittels eines Beutelfilters mit einer Lochweite von 0,1 bis 50 µm, durchgeführt wird (Verfahrensschritt: Sicherheitsfiltrieren FS). Es liegt dann ein klarer sicherheitsgefilterter Flüssigzucker LS⁵ mit einer Farbreinheit von kleiner 30 ICUMSA vor, der an einer zweiten Schnittstelle II-II den Anlagenausschnitt 100 als endbehandelter Flüssigzucker LS verlässt (siehe auch **Figur 2****).**

In der ersten Wärmetauschereinheit 12, die vorzugsweise als Wärmerückgewinnungseinheit mit bis zu 90 % Wärmerückgewinn arbeitet, wird der derart behandelte Flüssigzucker LS im Gegenstrom zu dem Wasser W und anschließend zu dem aus der ersten Filtrierungseinheit 5 austretenden vorgefilterten Flüssigzucker LS² geführt und dabei gekühlt (Verfahrensschritt: ersten Kühlen K1). In einer vierten Wärmetauschereinheit 13 wird der behandelte Flüssigzucker LS mit Kühlwasser beispielsweise auf 20 bis 30 °C abgekühlt (Verfahrensschritt: zweites Kühlen K2) und anschließend in einer Flüssigzucker-Bevorratungseinheit 14 bevorratet (Verfahrensschritt: Bevorraten von Flüssigzucker BV(LS)).

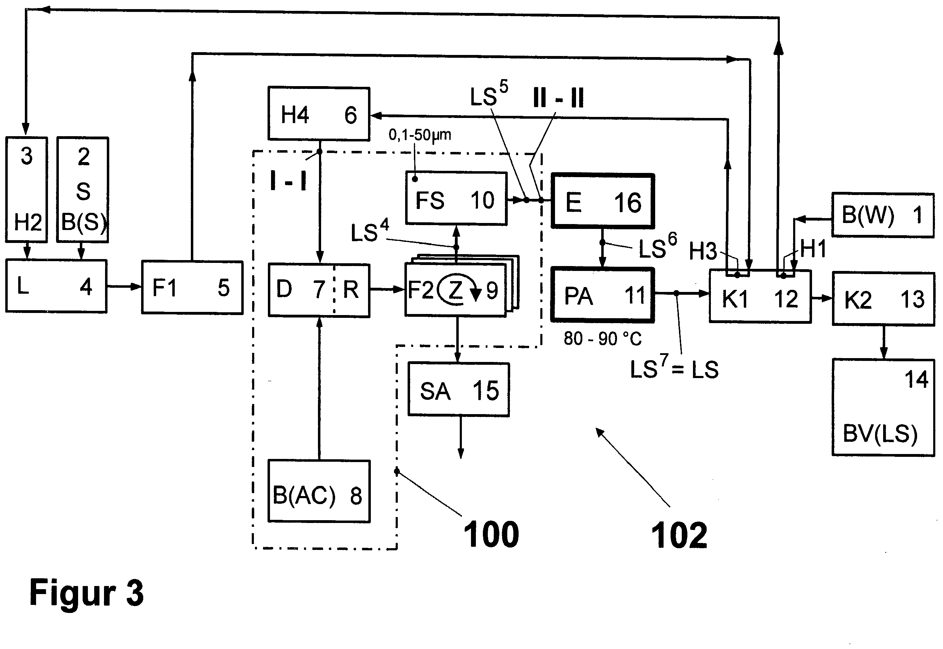

Soweit die nachfolgend beschriebenen **Figuren 3** bis **5** Verfahrensschritte und zugeordnete Anlagenteile enthalten, die bereits in den **Figuren 1** und **2** enthalten sind, wird auf Wiederholungen verzichtet, und es werden nur die Ergänzungen beschrieben.

Der sicherheitsgefilterte Flüssigzucker LS⁵ wird im Rahmen eines zweiten Verfahrens, das mit der in **Figur 3** dargestellten zweiten Anlage 102 durchführbar ist, nachfolgend optional einer Entgasereinheit 16, vorzugsweise einer Vakuum-Entgasereinheit, zugeführt, mit der der sicherheitsgefilterte Flüssigzucker LS⁵ definiert entgast wird (Verfahrensschritt: definiertes Entgasen E). Es entsteht ein entgaster Flüssigzucker LS⁶. Das definierte Entgasen E resultiert aus dem Sachverhalt, dass durch Steuerung des Vakuums auch der Restsauerstoff kontrolliert und gesteuert werden kann. Durch das definierte Entgasen E werden Geruchsstoffe und Restsauerstoff aus dem Flüssigzucker entfernt.

Der sicherheitsfiltrierte Flüssigzuckers LS⁵ oder der entgaste Flüssigzucker LS⁶ werden nachfolgend optional einer Pasteurisierungseinheit 11, die im Regelfall aus einer Erhitzer- und einer Heißhaltereinheit besteht, zugeführt (Verfahrensschritt: Pasteurisieren PA (Erhitzen und Heißhalten)), das zu einem sterilen Flüssigzucker LS⁷, dem endbehandelten Flüssigzucker LS, führt. Das Pasteurisieren PA wird im Regelfall bei einer Temperatur von 80-90 °C durchgeführt.

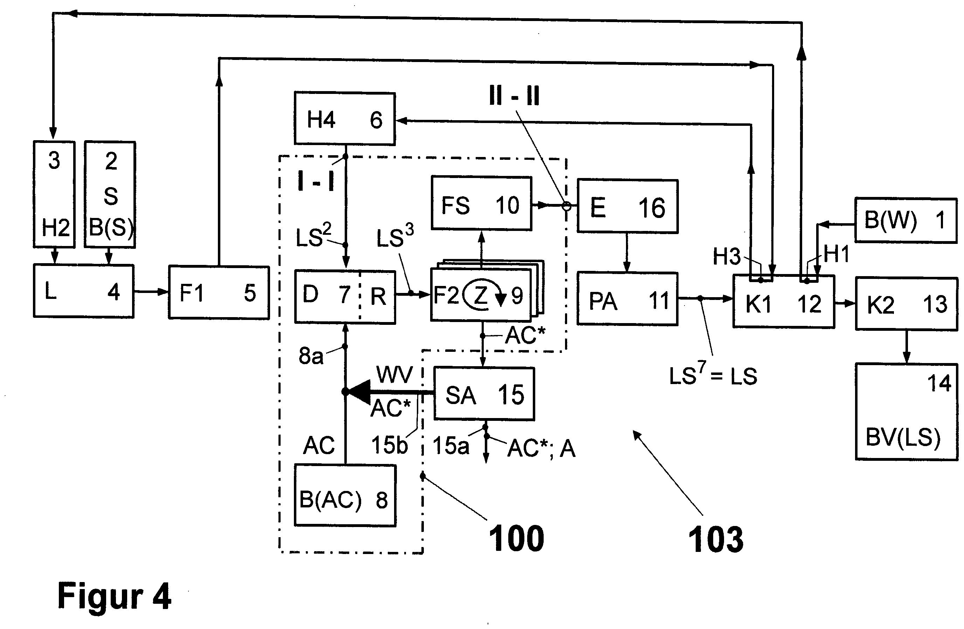

Die in die Filterkuchen-Sammeleinheit 15 von der Cricket-Filtrierungseinheit 9 ausgetragene und dort gesammelte beladene Aktivkohle AC* wird bei hinreichender Aktivität im Rahmen eines dritten Verfahrens, das mit der in **Figur 4** dargestellten dritten Anlage 103 durchführbar ist, der frischen Aktivkohle AC zur erneuten Verwendung beigemischt (Verfahrensschritt: Wiederverwenden WV). Hierzu mündet die Filterkuchen-Sammeleinheit 15 in eine Umlaufleitung 15b aus, die andererseits endseitig in eine Verbindungsleitung 8a zwischen der Inline-Dosierstelle 7 und der Aktivkohle-Bereitstellungseinheit 8 einmündet. Bei nicht hinreichender Aktivität der beladenen Aktivkohle AC* wird diese als Filtrierungsabfall A über einen an der Filterkuchen-Sammeleinheit 15 vorgesehenen ersten Auslass 15a verworfen.

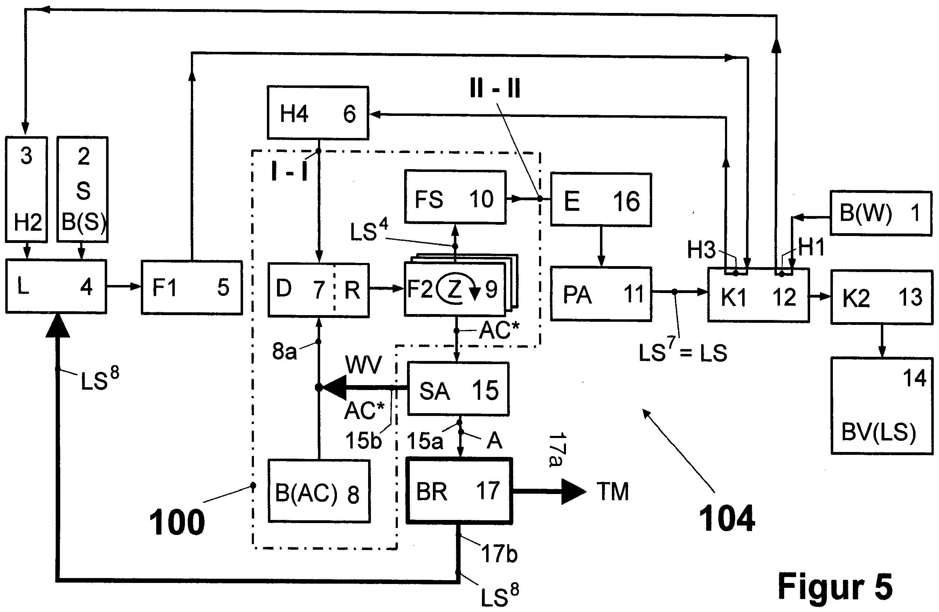

Ein in **Figur 5** dargestelltes viertes Verfahren und eine zugeordnete vierte Anlage 104 gestalten das erfindungsgemäße Verfahren sowohl in der Grundkonzeption als auch in seinen optionalen Erweiterungen (Entgasen, Pasteurisieren) in vorteilhafter Weise weiter aus. Der über den ersten Auslass 15a verworfene Filtrierungsabfall A besteht aus beladener Aktivkohle AC* mit nicht mehr hinreichender Aktivität, aus Reststoffen aus der Zuckerproduktion, Farbstoffen und mehr oder weniger große Mengen an Flüssigzucker. Dieser Filtrationsabfall A kann zur weiteren Erhöhung der Wirtschaftlichkeit einer nachfolgenden Behandlung unterworfen werden (Verfahrensschritt: Behandeln und Rückgewinnen BR). Diese besteht darin, dass eine Auftrennung in einen ausgepressten Flüssigzucker LS⁸ und in eine Abfall-Trockenmasse TM erfolgt, und dass der ausgepresste Flüssigzucker LS⁸ zur Zuckerlösereinheit 4 zurückgeführt wird. Es verbleibt die Abfalltrockenmasse TM, die verworfen oder auch verbrannt werden kann.

Anlagentechnisch wird dies dadurch erreicht, dass die Filterkuchen-Sammeleinheit 15 über den ersten Auslass 15a mit einer Behandlungs- und Produktrückgewinnungseinheit 17 verbunden ist, dass die Behandlungs- und Produktrückgewinnungseinheit 17 einen zweiten Auslass 17a für die Abfall-Trockenmasse TM und einen dritten Auslass 17b für den ausgepressten Flüssigzucker LS⁸ besitzt, und dass der dritte Auslass 17b mit der Zuckerlösereinheit 4 verbunden ist.

### BEZUGSZEICHENLISTE DER VERWENDETEN ABKÜRZUNGEN

### Figur 1 (Verfahrensschema)

- 100: Anlagenausschnitt
- 101: erste Anlage (erstes Verfahren)

- I - I: erste Schnittstelle
- II - II: zweite Schnittstelle

- 1: Wasserbereitstellungseinheit
- 2: Zuckerbereitstellungseinheit
- 3: zweite Wärmetauschereinheit
- 4: Zuckerlösereinheit
- 5: erste Filtrierungseinheit
- 6: dritte Wärmetauschereinheit

- 7: Dosiereinheit; Inline-Dosiereinheit
- 7a: Strömungsrohrreaktoreinheit
- 7b: Rührkesselreaktoreinheit

- 8: Aktivkohle-Bereitstellungseinheit
- 9: Cricket-Filtrierungseinheit
- 10: Sicherheitsfiltrierungseinheit
- 12: erste Wärmetauschereinheit (Wärmerückgewinnungseinheit)
- 13: vierte Wärmetauschereinheit
- 14: Flüssigzucker-Bevorratungseinheit
- 15: Filterkuchen-Sammeleinheit

### Stoffe

- AC: Aktivkohle (nicht vorgelöst)
- AC*: beladene Aktivkohle (aus Filterkuchen)

- LS¹: unbehandelter Flüssigzucker (60-65° Brix; 25-35° C)
- LS²: vorgefilterter Flüssigzucker
- LS³: Zucker-Aktivkohle-Lösung
- LS⁴: gefilterter Flüssigzucker
- LS⁵: sicherheitsgefilterter Flüssigzucker
- LS: endbehandelter Flüssigzucker (weniger als 30 ICUMSA; 20-30° C)

- S: Kristallzucker (bis zu 1000 ICUMSA)
- W: Wasser

- T²: Bereitstellungstemperatur (Temperatur des vorgefilterten Flüssigzuckers LS²)
- T^{B}: Behandlungstemperatur (Temperatur vor der Dosierung D)

- t: Reaktionszeit

### Verfahrensschritte

- B(W): Bereitstellen von Wasser
- B(S): Bereitstellen von Kristallzucker
- B(AC): Bereitstellen von Aktivkohle

- BV(LS): Bevorraten von Flüssigzucker (Endprodukt)

- D: Dosieren
- F1: erstes Filtrieren
- F2: direktes Filtrieren (Cricket-Filtrieren)
- FS: Sicherheitsfiltrieren

- H1: erstes Erwärmen
- H2: zweites Erwärmen
- H3: drittes Erwärmen
- H4: viertes Erwärmen

- K1: erstes Kühlen
- K2: zweites Kühlen

- L: Auflösen
- R: Reagieren
- SA: Sammeln
- Z: Zirkulieren

### Figur 2 (Ausschnitt aus Verfahrensschema gemäß Figur 1)

- 100: Anlagenabschnitt
- I - I: erste Schnittstelle
- II - II: zweite Schnittstelle

### Figur 3 (Verfahrensschema; mit Ergänzungen gegenüber Figur 1 und Figur 2)

- 102: zweite Anlage (zweites Verfahren)

- 11: Pasteurisierungseinheit (Erhitzer- und Heißhaltereinheit)
- 16: Entgasereinheit

### Stoffe

- LS⁶: entgaster Flüssigzucker
- LS⁷: steriler Flüssigzucker (LS)

### Verfahrensschritt

- E: definiertes Entgasen
- PA: Pasteurisieren (Erhitzen und Heißhalten)

### Figur 4 (Verfahrensschema; mit Ergänzungen gegenüber Figur 3)

- 103: dritte Anlage (drittes Verfahren)

- 8a: Verbindungsleitung

- 15a: erster Auslass
- 15b: Umlaufleitung

### Stoff

- A: Filtrierungsabfall

### Verfahrensschritt

- WV: Wiederverwenden

### Figur 5 (Verfahrensschema; mit Ergänzungen gegenüber Figur 4)

- 104: vierte Anlage (viertes Verfahren)

- 17: Behandlungs- und Produktrückgewinnungseinheit
- 17a: zweiter Auslass
- 17b: dritter Auslass

### Stoffe

- LS⁸: ausgepresster Flüssigzucker
- TM: Abfall-Trockenmasse

### Verfahrensschritt

- BR: Behandeln und Rückgewinnen

## Patentansprüche

1. Verfahren zur Reinigung von Flüssigzucker, hergestellt aus Kristallzucker (S) minderer Reinheit und Wasser (W), bei dem der zu reinigende Flüssigzucker als vorgefilterter Flüssigzucker (LS²), aus dem durch Filterung Beimengungen oberhalb von 100 µm abgeschieden sind, an einer ersten Schnittstelle (I - I) in einen Anlagenabschnitt (100) mit einer Behandlungstemperatur (T^{B}) eintritt und an einer zweiten Schnittstelle (II - II) aus dem Anlagenabschnitt (100) austritt, wobei das Verfahren ohne Filterhilfsstoffe und die für diese benötigten Trenn- und Abscheidevorrichtungen auskommt und bei dem folgende Schritte (c) bis (g) vorgesehen sind:
(c) Dosieren (D) von nicht vorgelöster Aktivkohle (AC) in einem Verhältnis von 0,01 bis 0,5 Mengenprozent zu dem Mengenstrom des vorgefilterten Flüssigzuckers (LS²) in Abhängigkeit von den in dem vorgefilterten Flüssigzucker (LS²) verbliebenen Verunreinigungen zur Gewinnung einer Zucker-Aktivkohle-Lösung (LS³),
(d) Reagieren (R) der Komponenten der Zucker-Aktivkohle-Lösung (LS³) miteinander über eine vorbestimmte Reaktionszeit (t) von 10 bis 60 Minuten,
(e) Zirkulieren (Z) der Zucker-Aktivkohle-Lösung (LS³) über einen zur direkten Filtration bestimmten Filter zwecks Aufbaus eines Filterkuchens aus der abzuscheidenden Aktivkohle (AC),
(f) direktes Filtrieren (F2) der Zucker-Aktivkohle-Lösung (LS³) über den nach Schritt (e) aufgebauten Filterkuchen, das zu einem gefilterten Flüssigzucker (LS⁴) führt,
(g) Sicherheitsfiltrieren (FS) des gefilterten Flüssigzuckers (LS⁴) zur Abscheidung von Aktivkohle (AC), die im Schritt (f) nicht zurückgehalten wurde, das nach den Schritten (c) bis (g) zu einem sicherheitsgefilterten Flüssigzucker (LS⁵) mit einem Wert für den Restfarbstoff von unter 30 ICUMSA führt.

2. Verfahren nach Anspruch 1,
**gekennzeichnet durch**
(h) definiertes Entgasen (E) des sicherheitsgefilterten Flüssigzuckers (LS⁵), das zu einem entgasten Flüssigzucker (LS⁶) führt.

3. Verfahren nach Anspruch 1 oder 2,
**gekennzeichnet durch**
(i) Pasteurisieren (PA) des sicherheitsgefilterten Flüssigzuckers (LS⁵) oder des entgasten Flüssigzuckers (LS⁶), das zu einem sterilen Flüssigzucker (LS⁷ bzw. LS) führt.

4. Verfahren nach einem der vorhergehenden Ansprüche,
**dadurch gekennzeichnet,**
**dass** dem Schritt (c) die folgenden Schritte (a) und (b) vorgeschaltet sind und dass der Schritt (j) dem letzten der Schritte (g) bis (i) nachgeschaltet ist:
(a) Auflösen (L) des Kristallzuckers (S) in Wasser (W), um einen unbehandelten Flüssigzucker (LS¹) zu erhalten,
(b) erstes Filtrieren (F1) des unbehandelten Flüssigzuckers (LS¹), um diesen aus einer Zuckerlösereinheit (4) abzuscheiden und den vorgefilterten Flüssigzucker (LS²) zu erhalten und
(b1) erforderlichenfalls wenigstens ein einstufiges Erwärmen (H3, H4) des vorgefilterten Flüssigzuckers;
(j) wenigstens einstufiges Kühlen (K1, K2) des aus dem letzten der Schritte (g) bis (i) generierten Flüssigzuckers (LS⁵, LS⁶, LS⁷ bzw. LS).

5. Verfahren nach einem der vorhergehenden Ansprüche,
**dadurch gekennzeichnet,**
**dass** der beim direkten Filtrieren (F2) entstehende Filterkuchen in Zeitabständen in eine Filterkuchen-Sammeleinheit (15) ausgetragen, dort gesammelt und als eine beladene Aktivkohle (AC*), wenn sie eine hinreichende Aktivität besitzt, der frischen Aktivkohle (AC) zum Wiederverwenden (WV) beigemischt wird.

6. Verfahren nach Anspruch 4,
**dadurch gekennzeichnet,**
**dass** der beim direkten Filtrieren (F2) entstehende Filterkuchen in Zeitabständen in eine Filterkuchen-Sammeleinheit (15) ausgetragen, dort gesammelt und als eine beladene Aktivkohle (AC*), wenn sie keine hinreichende Aktivität mehr besitzt, als ein Filtrierungsabfall (A) verworfen wird, dass ein Behandeln und Rückgewinnen (BR) des Filtrierungsabfalls (A) vorgesehen ist, das eine Auftrennung in einen ausgepressten Flüssigzucker (LS⁸) und in eine Abfall-Trockenmasse (TM) bewirkt, und dass der ausgepresste Flüssigzucker (LS⁸) zum unbehandelten Flüssigzucker (LS¹) zurückgeführt und diesem beigemischt wird.

7. Verfahren nach einem der Ansprüche 4 bis 6,
**dadurch gekennzeichnet,**
**dass** das erste Kühlen (K1) des aus dem letzten der Schritte (g) bis (i) generierten Flüssigzuckers (LS⁵, LS⁶, LS⁷ bzw. LS) in einem regenerativen Wärmeaustausch mit einem ersten Erwärmen (H1) des Wassers (W) und einem sich anschließenden dritten Erwärmen (H3) des vorfiltrierten Flüssigzuckers (LS²) durchgeführt wird.

8. Verfahren nach Anspruch 7,
**dadurch gekennzeichnet,**
**dass** das Wasser (W) nach dem regenerativen ersten Erwärmen (H1) einem zweiten Erwärmen (H2) unterzogen wird.

9. Verfahren nach Anspruch 7 oder8,
**dadurch gekennzeichnet,**
**dass** der vorgefilterte Flüssigzucker (LS²) nach dem regenerativen dritten Erwärmen (H3) einem vierten Erwärmen (H4) unterzogen wird.

10. Anlage zur Reinigung von Flüssigzucker, hergestellt aus Kristallzucker (S) minderer Reinheit und Wasser (W), in die der zu reinigende Flüssigzucker als vorgefilterter Flüssigzucker (LS²), aus dem durch Filterung Beimengungen oberhalb von 100 µm abgeschieden sind, an einer ersten Schnittstelle (I - I) in einen Anlagenabschnitt (100) mit einer Behandlungstemperatur (T^{B}) eintritt und an einer zweiten Schnittstelle (II - II) aus dem Anlagenabschnitt (100) als sicherheitsgefilterter Flüssigzucker (LS⁵) austritt und der Anlagenabschnitt (100) zwischen der ersten Schnittstelle (I - I) und der zweiten Schnittstelle (II - II), ausgehend von der ersten Schnittstelle (I - I), die folgenden Merkmale (E) bis (I) aufweist:
(E) eine mit der ersten Schnittstelle (I-I) verbundene Inline-Dosiereinheit (7), bestehend aus einer Mischdüse oder anderen Inline-Dosiermitteln, zum Dosieren (D) einer nicht vorgelösten Aktivkohle (AC) in den Strom des vorgefilterten Flüssigzuckers (LS²) zur Herstellung einer Zucker-Aktivkohle-Lösung (LS³),
(F) eine in die Inline-Dosiereinheit (7) einmündende Aktivkohle-Bereitstellungseinheit (8) zum Bereitstellen von Aktivkohle (B(AC)),
(G) entweder eine Strömungsrohrreaktoreinheit (7a) oder eine Rührkesselreaktoreinheit (7b), die jeweils mit der Inline-Dosiereinheit (7) in Reihenschaltung verbunden ist, zum Reagieren (R) der Komponenten der Zucker-Aktivkohle-Lösung (LS³) miteinander über eine vorbestimmte Reaktionszeit (t),
(H) eine mit der Strömungsrohrreaktoreinheit (7a) oder der Rührkesselreaktoreinheit (7b) in Reihenschaltung verbundene Cricket-Filtrierungseinheit (9) zum direkten Filtrieren (F2) der Zucker-Aktivkohle-Lösung (LS³) mittels eines aus der abzuscheidenden Aktivkohle (AC) durch Zirkulation (Z) in der Cricket-Filtrierungseinheit (9) aufgebauten Filterkuchens und
(I) eine mit der Cricket-Filtrierungseinheit (9) in Reihenschaltung verbundene Sicherheitsfiltrierungseinheit (10) zum Sicherheitsfiltrieren (FS) der in der Cricket-Filtrierungseinheit (9) nicht zurückgehaltenen Aktivkohle (AC).

11. Anlage nach Anspruch 10,
**dadurch gekennzeichnet,**
**dass** der Anlagenabschnitt (100) integraler Teil einer ersten, einer zweiten, einer dritten oder einer vierten Anlage (101, 102, 103, 104) ist, und dass die Anlagen (101, 102, 103, 104) jeweils die dem Anlagenabschnitt (100) vorgeordneten Merkmale (A) bis (D) und das nachgeordnete Merkmal (J) umfassen:
(A) eine Wasserbereitstellungseinheit (1) für Wasser (W), die mit einer Zuckerlösereinheit (4) verbunden ist,
(B) eine Zuckerbereitstellungseinheit (2) für Kristallzucker (S), die mit der Zuckerlösereinheit (4), in der der Kristallzucker (S) ein Auflösen (L) im Wasser (W) zu einem unbehandelten Flüssigzucker (LS¹) erfährt, verbunden ist,
(C) eine mit der Zuckerlösereinheit (4) in Reihenschaltung verbundene erste Filtrierungseinheit (5) für ein erstes Filtrieren (F1) des unbehandelten Flüssigzuckers (LS¹) zu dem vorgefilterten Flüssigzucker (LS²) und
(D) wenigstens eine mit der ersten Filtrierungseinheit (5) in Reihenschaltung verbundene erste Wärmetauschereinheit (12) für wenigstens ein einstufiges Erwärmen (H3, H4) des vorgefilterten Flüssigzuckers (LS²);
(J) die mit der Sicherheitsfiltrierungseinheit (10) in Reihenschaltung verbundene wenigstens erste Wärmetauschereinheit (12) für wenigstens ein einstufiges Kühlen (K1, K2) des sicherheitsgefilterten Flüssigzuckers (LS⁵).

12. Anlage nach Anspruch 10 oder 11,
**dadurch gekennzeichnet,**
**dass** der Sicherheitsfiltrierungseinheit (10), in Strömungsrichtung gesehen, eine Entgasereinheit (16) und/oder eine Pasteurisierungseinheit (11) nachgeordnet ist.

13. Anlage nach einem der Ansprüche 10 bis 12,
**dadurch gekennzeichnet,**
**dass** die Kricket-Filtrierungseinheit (9) mit einer Filterkuchen-Sammeleinheit (15) verbunden ist und diese über einen ersten Auslass (15a) zur Abfuhr von beladener Aktivkohle (AC*) oder Filtrierungsabfall (A) in die Umgebung ausmündet.

14. Anlage nach Anspruch 13,
**dadurch gekennzeichnet,**
**dass** die Filterkuchen-Sammeleinheit (15) über eine Umlaufleitung (15b) mit einer Verbindungsleitung (8a) zwischen der Inline-Dosiereinheit (7) und der Aktivkohle-Bereitstellungseinheit (8) verbunden ist.

15. Anlage nach Anspruch 13 oder 14,
**dadurch gekennzeichnet,**
**dass** die Filterkuchen-Sammeleinheit (15) über den ersten Auslass (15a) mit einer Behandlungs- und Produktrückgewinnungseinheit (17) verbunden ist, dass die Behandlungs- und Produktrückgewinnungseinheit (17) einen zweiten Auslass (17a) für eine Abfall-Trockenmasse (TM) und einen dritten Auslass (17b) für einen ausgepressten Flüssigzucker (LS⁸) besitzt, und dass der Auslass (17b) mit der Zuckerlösereinheit (4) verbunden ist.

16. Anlage nach einem der Ansprüche 10 bis 15,
**dadurch gekennzeichnet,**
**dass** das Wasser (W) und der vorfiltrierte Flüssigzucker (LS²) nacheinander und jeweils im Gegenstrom über die erste Wärmetauschereinheit (12) geführt sind, und dass dabei im regenerativen Wärmeaustausch mit dem in die erste Wärmetauschereinheit (12) eintretenden Flüssigzucker (LS⁵,LS⁶, LS) ein erstes Erwärmen (H1) des Wassers (W) und ein sich anschließendes drittes Erwärmen (H3) des vorfiltrierten Flüssigzuckers (LS²) bei gleichzeitigem ersten Kühlen (K1) des behandelten Flüssigzuckers (LS⁵,LS⁶, LS) stattfindet.

17. Anlage nach einem der Ansprüche 11 bis 16,
**dadurch gekennzeichnet,**
**dass** im Strömungsweg des Wassers (W) zwischen der Wasserbereitstellungseinheit (1) und der Zuckerlösereinheit (4) vor letzterer eine zweite Wärmeaustauschereinheit (3) für ein zweites Erwärmen (H2) des Wassers (W) vorgesehen ist.

18. Anlage nach einem der Ansprüche 11 bis 17,
**dadurch gekennzeichnet,**
**dass** im Strömungsweg des gefilterten Flüssigzuckers (LS²) zwischen der ersten Filtrierungseinheit (5) und der Inline-Dosiereinheit (7) und, in Strömungsrichtung gesehen, nach der ersten Wärmetauschereinheit (12) eine dritte Wärmeaustauschereinheit (6) für ein viertes Erwärmen (H4) des vorgefilterten Flüssigzuckers (LS²) vorgesehen ist.

## Claims

1. A method for purifying liquid sugar produced from granulated sugar (S) of low purity and water (W), in which the liquid sugar to be purified enters a system section (100) at a first interface (I - I) at a treatment temperature (T^{B}) as prefiltered liquid sugar (LS²), from which additions larger than 100 µm have been separated by filtering, and exits the system section (100) at a second interface (II - II), wherein the method does not require filter aids and the removal and separation devices which are necessary for them, and in which the following steps (c) to (g) are provided:
(c) dosing (D) non-predissolved activated carbon (AC) in a ratio of 0.01 to 0.5 percent by quantity to the mass flow of the prefiltered liquid sugar (LS²) depending on the impurities remaining in the prefiltered liquid sugar (LS²) to obtain a sugar-activated-carbon solution (LS³);
(d) reacting (R) the components of the sugar-activated-carbon solution (LS³) with each other over a predetermined reaction time (t) of 10 to 60 minutes;
(e) circulating (Z) the sugar-activated-carbon solution (LS³) via a filter intended for direct filtration for the purpose of forming a filter cake from the activated carbon (AC) which is to be separated;
(f) directly filtering (F2) the sugar-activated-carbon solution (LS³) via the filter cake formed after step (e), which results in a filtered liquid sugar (LS⁴);
(g) back-up filtering (FS) the filtered liquid sugar (LS⁴) to separate activated carbon (AC) which was not retained in step (f), which after steps (c) to (g) results in a back-up-filtered liquid sugar (LS⁵) with an ICUMSA value of less than 30 for the residual dye.

2. The method according to Claim 1, **characterized by**
(h) defined degassing (E) of the back-up-filtered liquid sugar (LS⁵), which results in a degassed liquid sugar (LS⁶).

3. The method according to Claim 1 or 2, **characterized by**
(i) pasteurization (PA) of the back-up-filtered liquid sugar (LS⁵) or the degassed liquid sugar (LS⁶), which results in a sterile liquid sugar (LS⁷ or, respectively LS).

4. The method according to one of the preceding claims, **characterized in that** step (c) is preceded by the steps (a) and (b) and that the last of steps (g) to (i) is followed by step (j):
(a) dissolving (L) of the granulated sugar (S) in water (W) in order to obtain an untreated liquid sugar (LS¹);
(b) first filtering (F1) of the untreated liquid sugar (LS¹) in order to separate the latter from a sugar dissolver unit (4) and to obtain the prefiltered liquid sugar (LS²); and
(b 1) if necessary, at least one single-stage heating (H3, H4) of the prefiltered liquid sugar;
(j) at least single-stage cooling (K1, K2) of the liquid sugar (LS⁵, LS⁶, LS⁷ or, respectively LS) generated from the last of steps (g) to (i).

5. The method according to one of the preceding claims, **characterized in that** the filter cake arising during the direct filtration (F2) is discharged at intervals into a filter cake collection unit (15), collected there and admixed as a loaded activated carbon (AC*), if it exhibits sufficient activity, to the fresh activated carbon (AC) for re-use (WV).

6. The method according to Claim 4, **characterized in that** the filter cake arising during the direct filtration (F2) is discharged at intervals into a filter cake collection unit (15), collected there and, as a loaded activated carbon (AC*), is discarded as filtration waste (A) if it no longer exhibits sufficient activity, and **in that** a treatment and recovery (BR) of the filtration waste (A) is provided, which brings about a separation into an extracted liquid sugar (LS⁸) and a waste dry mass (TM), and **in that** the extracted liquid sugar (LS⁸) is returned to the untreated liquid sugar (LS¹) and admixed to it.

7. The method according to one of Claims 4 to 6, **characterized in that** the first cooling (K1) of the liquid sugar (LS⁵, LS⁶, LS⁷ or, respectively LS) generated from the last of steps (g) to (i) is carried out in a regenerative heat exchange with a first heating (H1) of the water (W) and a subsequent third heating (H3) of the prefiltered liquid sugar (LS²).

8. The method according to Claim 7, **characterized in that** after the regenerative first heating (H1), the water (W) is subjected to a second heating (H2).

9. The method according to Claim 7 or 8, **characterized in that** after the regenerative third heating (H3), the prefiltered liquid sugar (LS²) is subjected to a fourth heating (H4).

10. A system for purifying liquid sugar produced from granulated sugar (S) of low purity and water (W), in which the liquid sugar to be purified enters a system section (100) at a first interface (I - I) at a treatment temperature (T^{B}) as prefiltered liquid sugar (LS²), from which additions larger than 100 µm have been separated by filtering, and exits the system section (100) at a second interface (II - II) as back-up-filtered liquid sugar (LS⁵), and the system section (100) between the first interface (I - I) and the second interface (II - II), proceeding from the first interface (I - I), has the following features (E) to (I):
(E) an inline dosing unit (7) connected to the first interface (I - I), consisting of a mixing nozzle or other inline dosing means, for dosing (D) non-predissolved activated carbon (AC) into the flow of the prefiltered liquid sugar (LS²) to produce a sugar-activated-carbon solution (LS³),
(F) an activated carbon supply unit (8) emptying into the inline dosing unit (7) for supplying activated carbon B(AC)),
(G) either a tubular flow reactor unit (7a) or a stirred-tank reactor unit (7b), each of which is connected in series with the inline dosing unit (7), for reacting (R) the components of the sugar-activated-carbon solution (LS³) with each other over a predetermined reaction time (t),
(H) a Cricket filtration unit (9) connected in series with the tubular flow reactor unit (7a) or the stirred-tank reactor unit (7b) for directly filtering (F2) the sugar-activated-carbon solution (LS³) by means of a filter cake formed from the activated carbon (AC) which is to be separated by circulation (Z) in the Cricket filtration unit (9), and
(I) a back-up filtration unit (10) connected in series with the Cricket filtration unit (9) for back-up filtering (FS) the activated carbon (AC) which was not retained in the Cricket filtration unit (9).

11. The system according to Claim 10, **characterized in that** the system section (100) is an integral part of a first, a second, a third or a fourth system (101, 102, 103, 104), and **in that** each of the systems (101, 102, 103, 104) comprises the features (A) to (D), which are disposed upstream of the system section (100), and the downstream feature (1):
(A) a water supply unit (1) for water (W), which is connected to a sugar dissolver unit (4),
(B) a sugar supply unit (2) for granulated sugar (S), which is connected to the sugar dissolver unit (4) in which the granulated sugar (S) is dissolved (L) in water (W) to become an untreated liquid sugar (LS¹),
(C) a first filtration unit (5) connected in series with the sugar dissolver unit (4), for a first filtering (F1) of the untreated liquid sugar (LS¹) to form the prefiltered liquid sugar (LS²), and
(D) at least one first heat exchanger unit (12) connected in series with the first filtration unit (5) for at least one single-stage heating (H3, H4) of the prefiltered liquid sugar (LS²);
(1) the at least first heat exchanger unit (12) connected in series with the back-up filtration unit (10) for at least one single-stage cooling (K1, K2) of the back-up-filtered liquid sugar (LS⁵).

12. The system according to Claim 10 or 11, **characterized in that** a degasser unit (16) and/or a pasteurization unit (11) is/are arranged downstream of the back-up filtration unit (10), as viewed in the direction of flow.

13. The system according to one of Claims 10 to 12, **characterized in that** the Cricket filtration unit (9) is connected to a filter cake collection unit (15) and that the latter opens out into the environment via a first outlet (15a) for carrying away loaded activated carbon (AC*) or filtration waste (A).

14. The system according to Claim 13, **characterized in that** the filter cake collection unit (15) is connected via a circulation line (15b) to a connection line (8a) between the inline dosing unit (7) and the activated carbon supply unit (8).

15. The system according to Claim 13 or 14, **characterized in that** the filter cake collection unit (15) is connected via the first connector (15a) to a treatment and product recovery unit (17), **in that** the treatment and product recovery unit (17) has a second outlet (17a) for a waste dry mass (TM) and a third outlet (17b) for extracted liquid sugar (LS⁸), and **in that** the outlet (17b) is connected to the sugar dissolver unit (4).

16. The system according to one of Claims 10 to 15, **characterized in that** the water (W) and the prefiltered liquid sugar (LS²) are conducted successively and, in each case, in counter-flow via the first heat exchanger unit (12), and **in that**, in regenerative heat exchange with the liquid sugar (LS⁵, LS⁶, LS) entering the first heat exchanger unit (12), a first heating (H1) of the water (W) and a subsequent third heating (H3) of the prefiltered liquid sugar (LS²) take place at the same time as the first cooling (K1) of the treated liquid sugar (LS⁵, LS⁶, LS).

17. The system according to one of Claims 11 to 16, **characterized in that** a second heat exchanger unit (3) for a second heating (H2) of the water (W) is provided in the flow path of the water (W) between the water supply unit (1) and the sugar dissolver unit (4), upstream of the latter.

18. The system according to one of Claims 11 to 17, **characterized in that** a third heat exchanger unit (6) for a fourth heating (H4) of the prefiltered liquid sugar (LS²) is provided in the flow path of the filtered liquid sugar (LS²) between the first filtration unit (5) and the inline dosing unit (7) and, as viewed in the direction of flow, downstream of the first heat exchanger unit (12).

## Revendications

1. Procédé de purification de sucre liquide produit à partir de sucre cristal (S) de pureté inférieure et d'eau (W), avec lequel le sucre liquide devant être purifié, comme sucre liquide préfiltré (LS²) duquel des additions supérieures à 100 µm sont séparées par filtrage, entre dans une section d'installation (100) à une première interface (I - I) avec une température de traitement (T^{B}) et sort de la section d'installation (100) à une deuxième interface (II - II), le procédé ne requérant pas d'adjuvants de filtration et de dispositifs de séparation nécessaires pour ceux-ci, et sur lequel les étapes suivantes (c) à (g) sont prévues :
(c) dosage (D) de charbon actif (AC) non dissous au préalable dans un rapport de 0,01 à 0,5 pourcentage massique dans le débit du sucre liquide préfiltré (LS²) en fonction des impuretés restées dans le sucre liquide préfiltré (LS²) pour la production d'une solution de sucre-charbon actif (LS³),
(d) réaction (R) des composants de la solution sucre-charbon actif (LS³) les uns avec les autres sur un temps de réaction prédéterminé (t) de 10 à 60 minutes,
(e) mise en circulation (Z) de la solution de sucre-charbon actif (LS³) par un filtre destiné à la filtration directe en vue de la formation d'un gâteau de filtre constitué par le charbon actif (AC) devant être séparé,
(f) filtration directe (F2) de la solution de sucre-charbon actif (LS³) par le gâteau de filtre formé après l'étape (e), conduisant à un sucre liquide filtré (LS⁴),
(g) filtration de sécurité (FS) du sucre liquide filtré (LS⁴) pour séparer le charbon actif (AC) qui n'a pas été retenu à l'étape (f), conduisant, après les étapes (c) à (g), à un sucre liquide ayant subi une filtration de sécurité (LS⁵), avec une valeur pour le colorant résiduel inférieure à 30 ICUMSA.

2. Procédé selon la revendication 1,
**caractérisé par** :
(h) dégazage défini (E) du sucre liquide ayant subi une filtration de sécurité (LS⁵), conduisant à un sucre liquide dégazé (LS⁶).

3. Procédé selon la revendication 1 ou 2,
**caractérisé par** :
(i) pasteurisation (PA) du sucre liquide ayant subi une filtration de sécurité (LS⁵) ou du sucre liquide dégazé (LS⁶), conduisant à un sucre liquide stérile (LS⁷ ou LS).

4. Procédé selon l'une des revendications précédentes,
**caractérisé en ce que**
les étapes (a) et (b) ci-dessous sont en amont de l'étape (c) et **en ce que** l'étape (j) est en aval de la dernière des étapes (g) à (i) :
(a) dissolution (L) du sucre cristal (S) dans de l'eau (W) pour obtenir un sucre liquide non traité (LS¹),
(b) première filtration (F 1) du sucre liquide non traité (LS¹) pour séparer celui-ci d'une unité de dissolution de sucre (4) et obtenir le sucre liquide préfiltré (LS²), et
(b 1) si nécessaire, au moins un chauffage à une étape (H3, H4) du sucre liquide préfiltré ;
(j) refroidissement à une étape (K1, K2), au moins, du sucre liquide (LS⁵, LS⁶, LS⁷ ou LS) généré par la dernière des étapes (g) à (i).

5. Procédé selon l'une des revendications précédentes,
**caractérisé en ce que**
le gâteau de filtre produit lors de la filtration directe (F2) est déchargé par intervalles dans une unité de collecte de gâteau de filtre (15), y est collecté et mélangé comme un charbon actif chargé (AC*), lorsqu'il possède une activité suffisante, au charbon actif frais (AC) pour réutilisation (WV).

6. Procédé selon la revendication 4,
**caractérisé en ce que**
le gâteau de filtre produit lors de la filtration directe (F2) est déchargé par intervalles dans une unité de collecte de gâteau de filtre (15), y est collecté et rejeté comme un charbon actif chargé (AC*), lorsqu'il ne possède plus une activité suffisante, comme déchet de filtration (A), **en ce qu'**un traitement et une récupération (BR) du déchet de filtration (A) sont prévus, entraînant une décomposition en un sucre liquide exprimé (LS⁸) et en une masse sèche de déchet (TM), et **en ce que** le sucre liquide exprimé (LS⁸) est retourné au sucre liquide non traité (LS¹) et mélangé à celui-ci.

7. Procédé selon l'une des revendications 4 à 6,
**caractérisé en ce que**
le premier refroidissement (K1) du sucre liquide (LS⁵, LS⁶, LS⁷ ou LS) généré par la dernière des étapes (g) à (i) est effectué dans un échange de chaleur régénératif avec un premier chauffage (H1) de l'eau (W) et un troisième chauffage (H3) du sucre liquide préfiltré (LS²) lui succédant.

8. Procédé selon la revendication 7,
**caractérisé en ce que**
l'eau (W) est soumise à un deuxième chauffage (H2) après le premier chauffage régénératif (H1).

9. Procédé selon la revendication 7 ou 8,
**caractérisé en ce que**
le sucre liquide préfiltré (LS²) est soumis à un quatrième chauffage (H4) après le troisième chauffage régénératif (H3).

10. Installation de purification de sucre liquide produit à partir de sucre cristal (S) de pureté inférieure et d'eau (W), dans laquelle le sucre liquide devant être purifié, comme sucre liquide préfiltré (LS²) duquel des additions supérieures à 100 µm sont séparées par filtrage, entre dans une section d'installation (100) à une première interface (I - I) avec une température de traitement (T^{B}), et sort de la section d'installation (100) à une deuxième interface (II - II), comme sucre liquide ayant subi un filtrage de sécurité (LS⁵), et en ce que la section d'installation (100) entre la première interface (I - I) et la deuxième interface (II - II) présente les caractéristiques (E) à (I) suivantes, à partir de la première interface (I - 1) :
(E) une unité de dosage en ligne (7) raccordée à la première interface (I - 1), se composant d'une buse mélangeuse ou d'autres moyens de dosage en ligne, pour le dosage (D) d'un charbon actif non dissous au préalable (AC) dans le flux du sucre liquide préfiltré (LS²) pour la production d'une solution de sucre-charbon actif (LS³),
(F) une unité de fourniture de charbon actif (8) débouchant dans l'unité de dosage en ligne (7) pour la fourniture de charbon actif (B(AC)),
(G) soit une unité de réacteur tubulaire à écoulement (7a) soit une unité de réacteur à cuve agitée (7b), lesquelles sont respectivement raccordées en série à l'unité de dosage en ligne (7) pour la réaction (R) des composants de la solution de sucre-charbon actif (LS³) les uns avec les autres pendant un temps de réaction prédéterminé (t),
(H) une unité de filtration Cricket (9) raccordée en série à l'unité de réacteur tubulaire à écoulement (7a) ou à l'unité de réacteur à cuve agitée (7b) pour le filtrage direct (F2) de la solution de sucre-charbon actif (LS³) au moyen d'un gâteau de filtre formé à partir du charbon actif (AC) devant être séparé, par mise en circulation (Z) dans l'unité de filtration Cricket (9), et
(1) une unité de filtration de sécurité (10) raccordée en série à l'unité de filtration Cricket (9) pour la filtration de sécurité (FS) du charbon actif (AC) non retenu dans l'unité de filtration Cricket (9).

11. Installation selon la revendication 10,
**caractérisée en ce que**
la section d'installation (100) est une partie intégrante d'une première, d'une deuxième, d'une troisième ou d'une quatrième installation (101, 102, 103, 104), et **en ce que** les installations (101, 102, 103, 104) comprennent respectivement les caractéristiques (A) à (D) disposées en amont de la section d'installation (100) et la caractéristique (1) disposée en aval :
(A) une unité de fourniture d'eau (1) pour l'eau (W), laquelle est raccordée à une unité de dissolution de sucre (4),
(B) une unité de fourniture de sucre (2) pour le sucre cristal (S), laquelle est raccordée à l'unité de dissolution de sucre (4), dans laquelle le sucre cristal (S) subit une dissolution (L) dans l'eau (W) en un sucre liquide non traité (LS¹),
(C) une première unité de filtration (5) raccordée en série à l'unité de dissolution du sucre (4) pour une première filtration (F1) du sucre liquide non traité (LS¹) en sucre liquide préfiltré (LS²), et
(D) au moins une première unité d'échangeur de chaleur (12) raccordée en série à la première unité de filtration (5) pour au moins un chauffage à une étape (H3, H4) du sucre liquide préfiltré (LS²),
(J) l'au moins première unité d'échangeur de chaleur (12) raccordée en série à l'unité de filtration de sécurité (10) pour au moins un refroidissement à une étape (K1, K2) du sucre liquide ayant subi une filtration de sécurité (LS⁵).

12. Installation selon la revendication 10 ou 11,
**caractérisée en ce qu'**
une unité de dégazage (16) et/ou une unité de pasteurisation (11) sont disposées en aval de l'unité de filtration de sécurité (10), vu dans la direction d'écoulement.

13. Installation selon l'une des revendications 10 à 12,
**caractérisée en ce que**
l'unité de filtration Cricket (9) est raccordée à une unité de collecte de gâteau de filtre (15) et **en ce que** celle-ci débouche dans l'environnement par une première sortie (15a) pour l'évacuation de charbon actif chargé (AC*) ou de déchet de filtration (A).

14. Installation selon la revendication 13,
**caractérisée en ce que**
l'unité de collecte de gâteau de filtre (15) est raccordée, par une conduite de circulation (15b), à une conduite de liaison (8a) entre l'unité de dosage en ligne (7) et l'unité de fourniture de charbon actif (8).

15. Installation selon la revendication 13 ou 14,
**caractérisée en ce que**
l'unité de collecte de gâteau de filtre (15) est raccordée à une unité de traitement et de récupération de produit (17) par la première sortie (15a),
**en ce que** l'unité de traitement et de récupération de produit (17) possède une deuxième sortie (17a) pour une masse sèche de déchet (TM) et une troisième sortie (17b) pour un sucre liquide exprimé (LS⁸), et **en ce que** la sortie (17b) est raccordée à l'unité de dissolution de sucre (4).

16. Installation selon l'une des revendications 10 à 15,
**caractérisée en ce que**
l'eau (W) et le sucre liquide préfiltré (LS²) sont conduits l'un après l'autre et respectivement à contre-courant par la première unité d'échangeur de chaleur (12), et **en ce que**, dans l'échange de chaleur régénératif avec le sucre liquide (LS⁵, LS⁶, LS) entrant dans la première unité d'échangeur de chaleur (12), un premier chauffage (H1) de l'eau (W) et un troisième chauffage (H3) du sucre liquide préfiltré (LS²) lui succédant ont lieu, avec premier refroidissement (K1) simultané du sucre liquide traité (LS⁵, LS⁶, LS).

17. Installation selon l'une des revendications 11 à 16,
**caractérisée en ce qu'**
une deuxième unité d'échangeur de chaleur (3) est prévue dans le trajet d'écoulement de l'eau (W) entre l'unité de fourniture d'eau (1) et l'unité de dissolution de sucre (4), avant cette dernière, pour un deuxième chauffage (H2) de l'eau (W).

18. Installation selon l'une des revendications 11 à 17,
**caractérisée en ce qu'**
une troisième unité d'échangeur de chaleur (6) est prévue dans le trajet d'écoulement du sucre liquide filtré (LS²), entre la première unité de filtration (5) et l'unité de dosage en ligne (7) et, vu dans la direction d'écoulement, après la première unité d'échangeur de chaleur (12), pour un quatrième chauffage (H4) du sucre liquide préfiltré (LS²).
